# FASCICULE DE BREVET EUROPEEN

(11) **EP 2 926 524 B1**
(45) Date de publication et mention de la délivrance du brevet: **20.02.2019**
(21) Numéro de dépôt: 13808128.6
(22) Date de dépôt: 29.11.2013
(51) Int. Cl.: H04L 29/06

(54) **ROUTAGE D'UNE REQUÊTE DE SERVICE VISANT UN ABONNÉ IMS**
WEITERLEITUNG EINER SERVICE-ANFRAGE AN EINEN IMS-ABONNENTEN
ROUTING OF A SERVICE REQUEST DESTINED FOR AN IMS SUBSCRIBER

(30) Priorité: 30.11.2012 FR 1261512
(43) Date de publication de la demande: 07.10.2015
(73) Titulaire: Orange, 75015 Paris (FR)
(72) Inventeur: LE ROUZIC, Jean-Claude, F-22560 Trebeurden (FR); LOAEC, Guy, F-29260 Ploudaniel (FR)
(86) Numéro de dépôt international: PCT/FR2013/052897
(87) Numéro de publication internationale: WO 2014/083289

(56) Documents cités:
- EP-A1- 1 750 400
- WO-A2-2006/038099
- US-A1- 2005 232 225
- US-A1- 2009 122 793
- US-A1- 2010 124 216
- "3rd Generation Partnership Project; Technical Specification Group Services and System Aspects; Voice Call Continuity (VCC) between Circuit Switched (CS) and IP Multimedia Subsystem (IMS); Stage 2 (Release 7);23206-710", ETSI DRAFT; 23206-710, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. zArchive, no. V7.1.0, 1 février 2007 (2007-02-01), pages 1-35, XP014138036,
- Poikselkä, M.: "The IMS IP Multimedia Concepts and Services", 1 janvier 2009 (2009-01-01), John Wiley & Sons, Chichester, GB, XP002711515, ISBN: 978-0-470-72196-4 pages 234-235, Section 9.2.2; page 234 - page 235
- HUAWEI ET AL: "Discussion Paper for Service Domain selection for mobile terminated calls from the IMS", 3GPP DRAFT; S2-124459_DISCUSSION PAPER FOR SERVICE DOMAIN SELECTION FOR MOBILE TERMINATED CALLS FROM THE IMS, 3RD GENERATION PARTNERSHIP PROJECT (3GPP), MOBILE COMPETENCE CENTRE ; 650, ROUTE DES LUCIO , vol. SA WG2, no. New Orleans, USA; 20121112 - 20121116 6 November 2012 (2012-11-06), XP050684107, Retrieved from the Internet: URL:http://www.3gpp.org/ftp/tsg_sa/WG2_Arc h/TSGS2_94_New_Orleans/Docs/ [retrieved on 2012-11-06]

## Description

La présente invention concerne les réseaux de communications de type IP (« *Internet Protocol* »), et notamment ceux parmi les réseaux IP qui sont aptes à mettre en oeuvre des protocoles de contrôle de session évolués. Les réseaux IP permettent notamment la transmission de données conversationnelles, dans le cadre de services tels que « Voix sur IP » (VoIP), « Partage de Contenu », ou « Messagerie Instantanée ».

Plus particulièrement, la présente invention concerne le routage d'un appel de VoIP émis par un dispositif-client appartenant à un réseau IP.

On notera à cet égard que, dans le cadre de la présente invention, un dispositif-client (« *User Equipment* » en anglais) est dit « appartenir » au réseau d'un opérateur donné lorsque l'utilisateur de ce dispositif-client possède un compte auprès de cet opérateur, et ce, quel que soit le réseau d'accès utilisé par le dispositif-client pour se connecter au réseau de l'opérateur. Ces dispositifs-clients peuvent par exemple être un terminal fixe ou mobile, ou une passerelle domestique (« *Residential Gateway* » en anglais) ou située dans une entreprise, ou encore une passerelle d'opérateur réseau (« *Voice Gateway* » en anglais) telle qu'un DSLAM-SIP (DSLAM sont les initiales des mots anglais « *Digital Subscriber Line Access Multiplexer* » signifiant « Multiplexeur d'Accès de Lignes d'Abonnés Numériques » ; il s'agit d'un dispositif collectant le trafic de données DSL qui transite sur un certain nombre de lignes téléphoniques).

Les protocoles de contrôle de session évolués classiques, tels que le protocole SIP (initiales des mots anglais « *Session Initiation Protocol* » signifiant « Protocole d'Initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265. Cette extension permet des procédures de notification d'événements.

Le protocole SIP est utilisé en particulier dans les infrastructures de type IMS (initiales des mots anglais « *IP Multimedia Subsystem* » signifiant « Sous-système Multimédia sur IP »). L'IMS a été défini par l'organisme de normalisation 3GPP (« *3^{rd} Génération Partnership Project* ») et TISPAN (« *Télécommunications and Internet Converged Services and Protocols for Advanced Networking* »). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en oeuvre une politique de gestion, fournir une Qualité de Service prédéterminée, et calculer les montants à facturer aux clients. L'IMS permet actuellement d'accéder à des services tels que la téléphonie, la visiophonie, et la Messagerie Instantanée, dont elle gère aussi l'interaction. On rappelle par exemple que la Messagerie Instantanée (« *Instant Messaging* », ou IM, en anglais), également appelée « tchat » (appellation dérivée du mot anglais « *chat* » signifiant « bavardage »), permet l'échange quasi-instantané de messages textuels et de fichiers, ce qui permet un dialogue interactif entre deux utilisateurs connectés au même réseau (tel qu'Internet).

Lorsqu'un utilisateur souhaite bénéficier des services offerts par un réseau IMS, il émet vers le réseau des messages de signalisation pouvant inclure notamment divers types de requêtes.

Tout d'abord, le dispositif-client de l'utilisateur doit, sauf exceptions (telles que certains appels d'urgence), s'enregistrer sur le réseau. Lorsque le réseau est incapable de faire le lien entre cet enregistrement et un enregistrement précédent (par exemple suite à une panne réseau, ou suite à un arrêt du terminal pendant une durée supérieure à une valeur prédéterminée), l'enregistrement est considéré comme étant un enregistrement initial. Après un enregistrement initial, le dispositif-client de l'utilisateur doit envoyer périodiquement au réseau une requête pour confirmer qu'il souhaite maintenir son enregistrement.

Pour pouvoir donc enregistrer les dispositifs-clients, les réseaux IMS comprennent un ou plusieurs serveurs d'enregistrement, appelés « S-CSCF » (initiales des mots anglais « *Serving-Call Server Control Function* » signifiant « Fonction de Commande de Session d'Appel Serveuse »), aptes (entre autres fonctions) à gérer la procédure d'enregistrement des dispositifs connectés au réseau.

En outre, ces réseaux comprennent un ou plusieurs serveurs, appelés « I-CSCF » (initiales des mots anglais « *Interrogating-Call Server Control Function* » signifiant « Fonction de Commande de Session d'Appel Interrogatrice ») - d'ailleurs souvent combinés physiquement avec les serveurs de type S-CSCF pour constituer des serveurs dénotés « I/S-CSCF » - qui, au moment de l'enregistrement d'un dispositif-client, interrogent un serveur appelé « HSS » (initiales des mots anglais « *Home Subscriber Server* » signifiant « Serveur d'Abonné de Rattachement »), afin de pouvoir sélectionner un serveur S-CSCF possédant les caractéristiques qui sont obligatoirement (et, le cas échéant, optionnellement) requises pour atteindre le niveau de service souscrit par l'utilisateur. Les serveurs HSS contiennent chacun une base de données-clients, et sont donc l'équivalent dans les réseaux IP des serveurs « HLR » (initiales des mots anglais « *Home Location Register* » signifiant « Registre de Localisation de Rattachement ») utilisés dans les réseaux GSM. Chaque serveur HSS contient le « profil » d'un certain nombre de dispositifs-clients du réseau, ce profil comprenant leur état d'enregistrement, ainsi que des données d'authentification et de localisation.

Après qu'un serveur S-CSCF lui ait été ainsi attribué, chaque utilisateur peut envoyer une requête de souscription à certains services valable pour la connexion en cours. Le principe général est qu'un dispositif-client peut souscrire à un service technique particulier à l'aide d'une requête appropriée (SIP SUBSCRIBE). Ainsi, dans le cas d'une souscription à l'état d'une ressource, des notifications d'événement (SIP NOTIFY) sont envoyées au dispositif-client dès lors que l'état de la ressource change ; par exemple, lorsque l'utilisateur d'un terminal dispose d'une boîte vocale sur le réseau, ce terminal peut souscrire à une notification de dépôt de message, c'est-à-dire qu'il peut demander à être informé chaque fois qu'un message a été enregistré sur cette boîte vocale ; le terminal de l'utilisateur peut, de même, demander à être notifié de son propre état d'enregistrement, et ainsi de suite.

Lorsqu'un utilisateur émet une requête de service visant un autre utilisateur (par exemple, dans le cadre d'un appel téléphonique), cette requête de service est reçue par le serveur S-CSCF initial (« *originating* » en anglais) en charge de l'utilisateur requérant. Ce serveur S-CSCF vérifie d'abord que le service requis est conforme à la souscription de cet utilisateur requérant. Si c'est le cas, le S-CSCF détermine si l'utilisateur visé est connu du réseau IMS ; deux cas sont alors possibles :
- soit l'utilisateur visé est connu du réseau IMS, auquel cas la requête est transmise au serveur I-CSCF, qui la route ensuite vers le serveur S-CSCF final (« *terminating* » en anglais) en charge de l'utilisateur visé,
- soit l'utilisateur visé n'est pas connu du réseau IMS, auquel cas la requête est transmise à un serveur BGCF (initiales des mots anglais « *Breakout Gateway Control Function* » signifiant « Fonction de Commande de Passerelle de Sortie ») ; ce serveur BGCF consulte alors des tables de routage, et, sur cette base, dirige la requête :
   - soit vers un serveur MGCF (initiales des mots anglais « *Media Gateway Control Function* » signifiant « Fonction de Commande de Passerelles de Transit »), qui commande une passerelle T-MGF assurant le transit des flux média appropriés vers le point d'entrée d'un réseau non-IP auquel appartient l'utilisateur visé,
   - soit vers le point d'entrée d'un réseau IP géré par un opérateur tiers.

La présente invention concerne notamment les moyens à mettre en place dans un réseau IMS pour router un appel de VoIP émis par un dispositif-client appartenant à un réseau IP, vers un dispositif-client destinataire appartenant à un réseau IMS (identique ou non audit réseau IP) mais ne bénéficiant pas nécessairement de la VoIP.

Concernant ce dispositif-client destinataire, il peut en particulier s'agir d'un terminal mobile. On notera à cet égard que l'invention est compatible avec toutes les technologies radio connues (TDMA, CDMA, W-CDMA, OFDMA, et ainsi de suite). Elle s'applique notamment aux réseaux cellulaires utilisant la technologie GSM (« *Global System for Mobile Communications* »), la technologie GPRS (« *General Packet Radio Service* »), la technologie UMTS (« *Universal Mobile Télécommunications System* »), ou encore la technologie LTE (« *Long Term Evolution* »).

On rappelle que la technologie GSM utilise un support de transmission de données par commutation en mode circuit (« *circuit-switched* », ou CS, en anglais).

La norme GPRS est une norme pour la téléphonie mobile dérivée de la norme GSM et permettant un débit de données plus élevé. On la qualifie souvent de « 2,5G » : le « G » est l'abréviation de génération, et le « 2,5 » indique que c'est une technologie à mi-chemin entre le GSM (2^{e} génération) et l'UMTS (3^{e} génération). Le GPRS ajoute au mode de transmission CS, qui comprend tous les services liés à la téléphonie, le mode de transmission « PS » (initiales des mots anglais « *packet-switched* », signifiant «commutation de paquets»). Les abonnés d'un opérateur mobile peuvent ainsi accéder à des services utilisant le protocole IP, tels que la messagerie électronique, le téléchargement de fichiers ou la consultation de sites Internet.

L'UMTS permet à la fois la commutation en mode circuit et la commutation en mode paquet. L'UMTS utilise la technologie W-CDMA, et constitue la mise en oeuvre européenne des spécifications IMT-2000 de l'UIT (« Union Internationale des Communications ») pour les systèmes radio cellulaires 3G. L'UMTS permet d'échanger des données contenues dans des paquets IP avec des serveurs appartenant à un réseau extérieur au réseau UMTS, tel que le réseau Internet.

La norme LTE fait officiellement partie de la norme UMTS, mais y incorpore de nombreuses modifications et améliorations, notamment l'utilisation de la modulation OFDM pour la liaison descendante et de SC-FDMA pour la liaison montante (au lieu de W-CDMA pour les deux liaisons dans le cas de l'UMTS). Le LTE nécessite une couverture radio dédiée, distincte de la couverture UMTS, et permet des débits de données beaucoup plus importants que la 2G et la 3G.

L'architecture IMS mentionnée ci-dessus offre l'avantage d'assurer la convergence des réseaux d'accès fixes et mobiles. Concernant ces derniers, l'architecture IMS est en particulier nécessaire pour les opérateurs commençant le déploiement de la technologie LTE et souhaitant offrir un service de téléphonie sur IP ; en effet, avec cette technologie LTE, les terminaux mobiles n'ont plus directement accès à un réseau CS, mais uniquement à un réseau PS.

Il sera donc possible pour les opérateurs d'utiliser la même infrastructure pour déployer des services de type VoIP, comme la « VoLTE » (Voix sur LTE), et d'autres services de type Data (c'est-dire, des services non-conversationnels en mode paquet), comme le « RCS-e ».

Le RCS-e (cf. le document « RCS-e - Advanced Communications: Services and Client Specification, Version 1.2 » publié le 23 septembre 2011 par la GSM Association) comprend des services de Messagerie Instantanée, et de partage d'images et de vidéos. Ces services (voir Section 3.3 du document précité) sont fournis par un réseau IP, en parallèle avec une éventuelle communication vocale établie dans un réseau CS ; pendant qu'ils sont en communication vocale, un abonné RCS-e peut ainsi, par exemple, envoyer à son correspondant les images filmées par une caméra incorporée dans le téléphone mobile de cet abonné RCS-e.

Dans la phase d'introduction des réseaux LTE, les opérateurs vont devoir maintenir, parallèlement à ces nouveaux réseaux 4G, les réseaux mobiles CS utilisant les technologies 2G et 3G. Le 3GPP a d'ailleurs défini les modalités de transfert d'accès lorsqu'un abonné en cours de communication se déplace d'une cellule LTE vers une cellule 2G ou 3G, afin d'assurer la continuité du service téléphonique.

On se trouve ainsi dans une situation où certains opérateurs déploient la technologie LTE et un réseau IMS pour offrir des services Data uniquement, alors que d'autres offrent, sur leur réseau LTE/IMS, à la fois des services de VoIP et des services Data, et enfin que d'autres offrent sur leur coeur de réseau IMS certains services Data pouvant être combinés par leurs utilisateurs avec un appel téléphonique établi (au moins partiellement) sur un réseau CS (une telle combinaison étant illustrée par le RCS-e).

Dans ce contexte, de nouvelles fonctions de routage sont nécessaires dans les coeurs de réseau IMS. En effet, les identités utilisées dans un réseau téléphonique fixe ou mobile, et dans un réseau IMS étant identiques (à savoir, les numéros de téléphone des usagers), mais pour offrir des services différents (service téléphonique, service RCS-e, et ainsi de suite), une requête de service (par exemple, un appel téléphonique) visant un usager destinataire connu du réseau IMS sera transmise au S-CSCF final (« *terminating* ») en charge de cet usager, mais le réseau IMS devra ensuite être capable de déterminer s'il faut acheminer la requête de service vers une adresse IP ou vers un réseau téléphonique particulier.

En particulier, il faut prévoir le mécanisme nécessaire au routage d'un appel de VoIP émis par un dispositif-client appartenant à un réseau IP à destination d'un abonné IMS du type « RCS-e pur », c'est-à-dire bénéficiant de services Data de la part de ce réseau IMS, mais dont les services téléphoniques sont fournis par un réseau CS. Or il n'existe pas dans l'état actuel des normes 3GPP de possibilité de réaliser un tel routage dans un coeur IMS, de sorte que deux options seulement sont laissées aux opérateurs :
- soit le rejet de l'appel par le coeur de réseau IMS du fait que l'appelé n'est pas abonné à un service de VoIP auprès du réseau IMS,
- soit la poursuite de l'appel vers l'appelé, auquel cas l'appel n'est plus rejeté par le réseau, mais par le terminal appelé puisque ce dernier n'est (vraisemblablement) pas compatible avec la VoIP.
Il va de soi que ces options sont toutes deux catastrophiques sur le plan commercial, puisqu'il en résulte que les abonnés VoIP ne peuvent pas appeler certains abonnés téléphoniques à un réseau CS.

La demande EP 1750400 concerne les « services CSI » (« *Combined CS Call and IMS session* »). Les services CSI permettent à un terminal d'utiliser un réseau CS (c'est-à-dire, à commutation de circuits) pour les appels vocaux, et un réseau IMS pour les services PS (c'est-à-dire, à commutation de paquets), tels que la messagerie ou le transfert de fichier. L'utilisation des services CSI n'est toutefois possible que pour les abonnés possédant un terminal compatible ; de plus, le réseau IMS doit comprendre un serveur d'applications dédié aux services CSI.

La demande US 2010/124,216 enseigne que, pour déterminer qu'un appel doit être routé vers un domaine CS, l'on peut se dispenser d'une interrogation ENUM dans certains cas, par exemple lorsque la requête d'appel contient un code d'identification de circuit (CIC) ou un préfixe dans la R-URI. Le procédé correspondant est mis en oeuvre dans le serveur S-CSCF « *originating* ».

Selon la demande US 2005/232,225, un appel visant un abonné au réseau IMS peut être routé hors du coeur de réseau IMS de diverses manières, par exemple vers un ordinateur ou vers un téléphone fixe, selon le type d'appel. Pour ce faire, le destinataire de l'appel doit avoir enregistré préalablement un profil de souscription comprenant des associations entre, d'une part, un type d'appel, et d'autre part un identifiant (« *call-type specific destination identifier* », ou CDI) respectif. Le serveur S-CSCF « *terminating* » utilise ces CDI pour diriger les appels vers l'abonné visé.

La société Huawei a présenté au 3GPP (réunion n° 94 du groupe de normalisation SA2, Nouvelle-Orléans, USA, 12 au 16 novembre 2012) une proposition (paragraphe 7.2X à ajouter à la norme TS 23.221 du 3GPP) destinée à résoudre le problème du routage d'un appel téléphonique émis par un abonné VoIP à destination d'un terminal mobile. Selon cette proposition, lorsqu'un tel appel parvient au serveur I-CSCF (appelé « I-CSCF *terminating* » par Huawei) du domaine IMS auquel appartient le terminal mobile, ce serveur I-CSCF interroge le serveur HSS. Le serveur HSS décide où l'appel sera dirigé, à savoir, vers un coeur de réseau IMS, ou vers un domaine de téléphonie mobile CS, ou encore vers une plateforme de services. Puis le serveur HSS envoie au serveur I-CSCF des informations lui permettant de diriger l'appel soit vers un serveur S-CSCF (pour traitement au sein d'un réseau IMS), soit vers un serveur BGCF (pour traitement au sein d'un domaine de téléphonie mobile CS).

Cette proposition présente l'inconvénient qu'elle confie la responsabilité de la décision de routage au serveur HSS : or, dans la logique actuelle des normes 3GPP, le serveur HSS n'est pas apte à interpréter les données de profil utilisateur stockées en son sein, et ne sait donc pas quels services sont rendus à l'appelé ; le fait de confier les décisions de routage au serveur HSS crée ainsi un risque d'incompatibilité entre les divers services (par exemple, un renvoi d'appels) rendus à l'appelé. De plus, cette proposition implique une évolution de l'interface entre le serveur I-CSCF et le serveur HSS.

La présente invention concerne donc un serveur S-CSCF dans un réseau IMS, comprenant des moyens pour recevoir une requête de service visant un dispositif-client appartenant audit réseau IMS et dont ledit serveur S-CSCF a la charge. Ledit serveur S-CSCF est remarquable en ce qu'il comprend aussi des moyens pour :
- effectuer, sur la base d'éléments d'information contenus dans ladite requête de service, des vérifications comprenant
   - la détermination que le service requis est un service téléphonique, et
   - la détermination que l'utilisateur du dispositif-client visé dans la requête de service n'a pas souscrit à un service téléphonique auprès de l'opérateur du réseau IMS, et
- si le résultat desdites vérifications est positif, diriger la requête de service vers un réseau téléphonique distinct du réseau IMS auquel appartient ledit dispositif-client visé.

Ainsi, la présente invention propose d'introduire une fonction de routage apte à déterminer (sur la base d'informations contenues dans la requête de service, comme expliqué en détail ci-dessous) vers quel point du réseau IMS auquel appartient le dispositif-client visé la requête doit être dirigée.

Comme décrit succinctement ci-dessus, la proposition Huawei (dans le cadre plus restreint, en fait, d'un appel téléphonique vers un terminal mobile) prévoit, sans doute dans le but de mettre en oeuvre ce routage au plus près de la réception de la requête par le I-CSCF *terminating*, de placer une fonction de routage dans le *serveur HSS.* Selon la présente invention, au contraire, on laisse la requête de service poursuivre son cheminement classique jusqu'au serveur S-CSCF *terminating*, et c'est dans ce *serveur S-CSCF terminating* que l'on place une fonction de routage appropriée.

Ce placement selon l'invention de la fonction de routage est avantageux car les serveurs S-CSCF selon l'état de l'art sont, quant à eux, aptes à interpréter les informations de service contenues dans une requête, et à prendre les décisions de routage qui en découlent ; comme expliqué en détail ci-dessous, c'est notamment le cas pour les serveurs S-CSCF *terminating.* L'invention permet donc de garantir la cohérence des services rendus au dispositif-client visé dans la requête.

Selon des caractéristiques particulières, ledit serveur S-CSCF comprend aussi des moyens pour, lorsqu'il détermine que le service requis est un service téléphonique, vérifier en outre que le format du numéro de téléphone indiqué dans la requête de service est bien conforme aux normes concernant le format des numéros de téléphone.

Grâce à ces dispositions, on évite avantageusement de poursuivre le traitement d'une requête de service ne pouvant être satisfaite car formellement erronée.

Corrélativement, l'invention concerne un procédé de routage d'une requête de service visant un dispositif-client appartenant à un réseau IMS, comprenant l'étape suivante :
a) réception de ladite requête de service par le serveur S-CSCF final en charge, dans ledit réseau IMS, du dispositif-client visé.
Ledit procédé est remarquable en ce qu'il comprend ensuite les étapes suivantes :
b) ledit serveur S-CSCF effectue, sur la base d'éléments d'information contenus dans ladite requête de service, des vérifications comprenant
   - la détermination que le service requis est un service téléphonique, et
   - la détermination que l'utilisateur du dispositif-client visé dans la requête de service n'a pas souscrit à un service téléphonique auprès de l'opérateur du réseau IMS, et
c) si le résultat desdites vérifications est positif, le serveur S-CSCF dirige la requête de service vers un réseau téléphonique distinct du réseau IMS auquel appartient ledit dispositif-client visé.

Ladite requête de service pourra notamment avoir été émise par un dispositif-client appartenant à un réseau IP. Mais elle pourra aussi, par exemple, avoir été routée vers ledit réseau IMS à partir d'un réseau CS suite à une erreur d'acheminement.

Selon des caractéristiques particulières, si ledit serveur S-CSCF détermine à ladite étape b) que le service requis est un service téléphonique, alors le S-CSCF vérifie en outre que le format du numéro de téléphone indiqué dans la requête de service est bien conforme aux normes concernant le format des numéros de téléphone.

Les avantages offerts par ces procédés sont essentiellement les mêmes que ceux offerts par les serveurs S-CSCF corrélatifs succinctement exposés ci-dessus.

On notera qu'il est possible de réaliser ces serveurs S-CSCF dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour gérer le fonctionnement d'un serveur S-CSCF tel que succinctement exposé ci-dessus, lorsqu'il est exécuté sur un ordinateur.

Les avantages offerts par ce programme d'ordinateur sont essentiellement les mêmes que ceux offerts par ledit procédé.

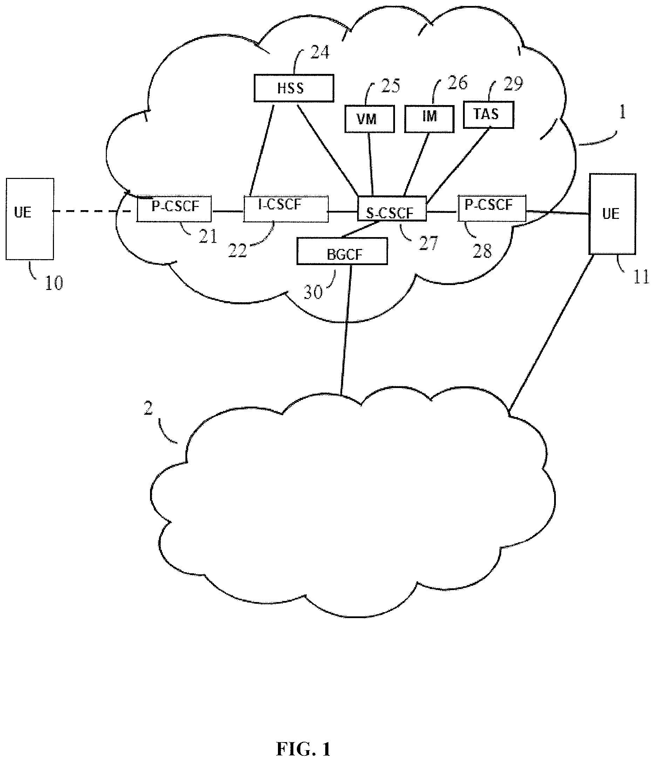

D'autres aspects et avantages de l'invention apparaîtront à la lecture de la description détaillée ci-dessous de modes de réalisation particuliers, donnés à titre d'exemples non limitatifs. La description se réfère à la **figure 1** qui l'accompagne, laquelle représente schématiquement, à titre d'exemple, un système pour la fourniture de services multimédia apte à mettre en oeuvre l'invention.

Le système illustré sur la **figure 1** met en oeuvre une architecture de réseau de type IMS 1, tel que présenté succinctement ci-dessus. Les services multimédia offerts par ce réseau IMS 1 peuvent comprendre des services de téléphonie, de vidéo-téléphonie, de partage de contenu (« *content-sharing* » en anglais), de Présence, de Messagerie Instantanée, ou de télévision. Ces services sont à la disposition de l'utilisateur d'un dispositif-client (« *User Equipment* », ou UE en anglais) 11 appartenant au réseau 1, qui permet à l'UE 11 d'échanger des flux multimédias et des signaux de contrôle de session conformes au protocole SIP, par exemple avec un UE 10.

Cet UE 10 appartient à un réseau IP, qui peut, en particulier, être le réseau IMS 1 lui-même. L'UE 10 peut être un terminal fixe ou mobile, ou une passerelle domestique ou d'entreprise, disposant de moyens de signalisation SIP et pouvant comprendre des moyens de restitution d'un contenu audiovisuel.

L'UE 11 est un terminal fixe ou mobile appartenant (en sus du réseau IMS 1) à un réseau téléphonique 2, par exemple un réseau à commutation de circuits (CS).

Comme le montre la figure 1, ce réseau IMS 1 comprend, outre une infrastructure de transport IP (non représentée) :
- au moins un serveur S-CSCF ; le serveur S-CSCF 27 gère notamment la procédure d'enregistrement des dispositifs connectés au réseau 1 ; le serveur S-CSCF 27 gère également le routage de la signalisation entre l'UE 11 et les serveurs de messagerie vocale VM 25, de Messagerie Instantanée 26, et de téléphonie TAS 29 ;
- au moins un serveur I-CSCF ; le serveur I-CSCF 22 gère notamment le routage en direction d'autres terminaux gérés par le même réseau IMS 1 et le routage de la signalisation entre ce réseau IMS 1 et d'autres réseaux ;
- au moins un serveur P-CSCF (initiales des mots anglais « *Proxy-Call Server Control Function* » signifiant « Fonction de Commande de Session d'Appel Mandataire ») ; le serveur P-CSCF 21 sert d'entité de raccordement entre le réseau 1 et le réseau d'accès utilisé par l'UE 10 ; le serveur P-CSCF 28 sert d'entité de raccordement entre le réseau 1 d'une part, et l'UE 11 ou un réseau d'accès utilisé par l'UE 11 d'autre part ; toute la signalisation SIP échangée entre l'UE 10 (respectivement 11) et le serveur S-CSCF 27 passe par le serveur P-CSCF 21 (respectivement 28) ;
- au moins un serveur de base de données, de type HSS ; le serveur HSS 24 contient le profil de l'utilisateur de l'UE 11 en termes de données d'authentification, de localisation et de services souscrits ;
- au moins un serveur VM 25 de messagerie vocale (« *message-summary* » en anglais) ; le serveur VM 25 gère une éventuelle souscription de l'UE 11 aux événements de dépôt/consultation des messages à l'intention de l'utilisateur de l'UE 11, et notifie le dispositif-client 11 lors de l'occurrence de ces événements ;
- au moins un serveur de Messagerie Instantanée IM 26 (mentionné ci-dessus) ; en cas de souscription de l'utilisateur de l'UE 11 au service de Messagerie Instantanée (le cas échéant *via* un service RCS-e), cet utilisateur peut dialoguer « instantanément » en ligne avec d'autres abonnés à ce service ;
- au moins un serveur de téléphonie TAS 29 ; le serveur TAS gère les éventuels services téléphoniques auxquels l'utilisateur de l'UE 10 a souscrits auprès de l'opérateur du réseau 1, tels que la présentation du numéro ou le renvoi d'appel ; et
- au moins un serveur BGCF 30 (mentionné ci-dessus).

Les serveurs de messagerie vocale VM 25, de Messagerie Instantanée IM 26, et de téléphonie TAS 29 sont des exemples de ce que l'on appelle des AS (initiales des mots anglais « *Application Servers* » signifiant « Serveurs d'Applications »).

Selon la norme TS 24.229 du 3GPP (cf. notamment, dans la version 11.5.0 de cette norme, la clause 5.4.3.3, items 3C and 3D, ainsi que l'Annexe I), lorsque le S-CSCF 27 reçoit du serveur I-CSCF 22 une requête de service visant l'utilisateur qui a préalablement enregistré l'UE 11 :
- le S-CSCF 27 vérifie que ce service est conforme à la souscription de l'utilisateur de l'UE 11 auprès de l'opérateur du réseau 1, et
- en cas de conformité, le S-CSCF 27 fait suivre la requête vers une adresse de contact adéquate de l'UE 11 (par exemple, si le service demandé est un appel téléphonique vers le numéro de téléphone de l'utilisateur de l'UE 11, ladite adresse de contact est habituellement une adresse IP associée audit numéro de téléphone).

On va décrire à présent les étapes d'un procédé de routage d'une requête de service visant l'UE 11, selon un mode de réalisation de l'invention.

Lors d'une étape E1, l'UE 10, qui est au moins abonné au service de VoIP (et, éventuellement, aussi au service RCS-e) sur le réseau IP auquel il appartient (qui peut être un réseau IMS, en particulier le réseau 1), émet une requête de service visant l'utilisateur de l'UE 11, et cette requête de service est transmise, de manière classique, au S-CSCF 27 final (« *terminating* ») en charge de l'UE 11 dans le réseau IMS 1.

Lors d'une étape E2, le S-CSCF 27 effectue un certain nombre de vérifications prédéterminées. Notamment, le S-CSCF 27 vérifie, sur la base d'éléments contenus dans la requête de service (voir détails ci-dessous), si le service requis est un appel téléphonique. Si c'est le cas, le S-CSCF 27 vérifie aussi :
- si l'appelé, c'est-à-dire l'utilisateur de l'UE 11, a souscrit à un service téléphonique auprès de l'opérateur du réseau IMS 1, et
- si le format du numéro de téléphone indiqué dans la requête est bien conforme aux normes concernant les numéros de téléphone.

En variante, le S-CSCF 27 vérifie d'abord, sur la base d'éléments contenus dans la requête de service, si le service requis est conforme à la souscription de l'utilisateur de l'UE 11 auprès du réseau IMS 1 ; si ce *n'est pas* le cas, le S-CSCF 27 vérifie si le service requis est un service téléphonique ; si le service requis est effectivement un service téléphonique, le S-CSCF 27 vérifie en outre si le format du numéro de téléphone indiqué dans la requête est conforme aux normes concernant les numéros de téléphone.

Si, lors de l'étape E2, le S-CSCF 27 détermine que le service requis est un appel téléphonique, mais que le format du numéro de téléphone indiqué dans la requête n'est pas conforme aux normes, alors l'appel est rejeté lors d'une étape E3a.

Si, lors de l'étape E2, le S-CSCF 27 détermine que le service requis est un appel téléphonique, que le format du numéro de téléphone indiqué dans la requête est conforme aux normes, et que l'utilisateur de l'UE 11 a souscrit à un service téléphonique auprès de l'opérateur du réseau 1, alors l'appel est transmis à l'UE 11 lors d'une étape E3b.

Si en revanche, lors de l'étape E2, le S-CSCF 27 détermine que le service requis est un appel téléphonique et que le format du numéro de téléphone indiqué est conforme aux normes, mais que l'utilisateur de l'UE 11 *n'a pas* souscrit à un service téléphonique auprès de l'opérateur du réseau 1 (ce qui est le cas, par exemple, d'un abonné « RCS-e pur »), alors, lors d'une étape E3c, la requête est transmise à un serveur BGCF 30, pour routage de l'appel *via* le réseau téléphonique 2 auquel appartient l'UE 11, c'est-à-dire un réseau téléphonique mobile si l'UE 11 est un terminal mobile, ou un réseau téléphonique fixe (par exemple, le Réseau Téléphonique Commuté Public) si l'UE 11 est un terminal fixe.

Concernant les informations utilisées par le S-CSCF 27 pour déterminer le type de service requis et prendre en conséquence la décision de routage appropriée, on peut envisager au moins les deux variantes suivantes (seules ou en combinaison).

Selon une première variante, le S-CSCF 27 s'appuie sur un identifiant de service « ICSI » figurant, par exemple, dans le header « P-Asserted-Service » de la requête de service reçue ; les identifiants ICSI (initiales des mots anglais « *IMS Communication Service Identifier* ») sont définis dans la norme TS 24.229 précitée, notamment en Section 7.2A.8. Ainsi, si cet identifiant ICSI correspond au service téléphonique, si la Request-URI de la requête est un numéro de téléphone, et si l'abonné appelé *n'a pas* souscrit au service de voix sur IP auprès de l'opérateur du réseau IMS 1, alors le S-CSCF sélectionne un serveur BCGF 30 pour l'acheminement de l'appel vers le réseau téléphonique 2.

Selon une deuxième variante, le S-CSCF 27 s'appuie sur le contenu lui-même de la requête de service reçue. On peut citer, à titre d'exemples non-limitatifs, l'utilisation :
- du contenu SDP (initiales des mots anglais « *Session Description Protocol* » signifiant « Protocole de Description de Session »), et en particulier d'un éventuel type de média audio indiqué dans ce contenu SDP, et/ou
- du header « Content-Type », et/ou
- du header « Accept-Contact ».

L'invention peut être mise en oeuvre au sein de serveurs S-CSCF au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour gérer le fonctionnement d'un serveur S-CSCF selon l'invention.

En effet, l'invention vise aussi un programme d'ordinateur téléchargeable depuis un réseau de communication comprenant des instructions pour gérer le fonctionnement d'un serveur S-CSCF selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour gérer le fonctionnement d'un serveur S-CSCF selon l'invention.

## Revendications

1. Serveur Serving Call Server Control Function, S-CSCF, capable d'opérer dans un réseau IMS, comprenant des moyens pour recevoir une requête de service visant un dispositif-client (11) appartenant audit réseau IMS (1) et dont ledit serveur S-CSCF (27) a la charge,
le serveur S-CSCF comprenant aussi des moyens pour :
- effectuer, sur la base d'éléments d'information contenus dans ladite requête de service, des vérifications comprenant
• la détermination que le service requis est un service téléphonique, et
• la détermination que l'utilisateur du dispositif-client (11) visé dans la requête de service n'a pas souscrit à un service téléphonique auprès de l'opérateur du réseau IMS (1), et
- si le résultat desdites vérifications est positif, diriger la requête de service vers un réseau téléphonique (2), distinct du réseau IMS (1), auquel appartient ledit dispositif-client visé (11).

2. Serveur S-CSCF selon la revendication 1, **caractérisé en ce qu'**il comprend aussi des moyens pour, lorsqu'il détermine que le service requis est un service téléphonique, vérifier en outre que le format du numéro de téléphone indiqué dans la requête de service est bien conforme aux normes concernant le format des numéros de téléphone.

3. Serveur S-CSCF selon la revendication 1 ou la revendication 2, **caractérisé en ce que** lesdits éléments d'information contenus dans la requête de service comprennent un identifiant de service IMS Communication Service Identifier, ICSI.

4. Serveur S-CSCF selon la revendication 1 ou la revendication 2, **caractérisé en ce que** lesdits éléments d'information contenus dans la requête de service se trouvent dans la partie Session Description Protocol, SDP, et/ou dans le header « Content-Type », et/ou dans le header « Accept-Contact » de ladite requête.

5. Procédé de routage d'une requête de service visant un dispositif-client (11) appartenant à un réseau IMS (1), comprenant l'étape suivante :
a) réception de ladite requête de service par le serveur Serving Call Server Control Function, S-CSCF (27), final en charge, dans ledit réseau IMS (1), du dispositif-client visé (11), le procédé comprenant ensuite les étapes suivantes :
b) ledit serveur S-CSCF (27) effectue, sur la base d'éléments d'information contenus dans ladite requête de service, des vérifications comprenant
• la détermination que le service requis est un service téléphonique, et
• la détermination que l'utilisateur du dispositif-client (11) visé dans la requête de service n'a pas souscrit à un service téléphonique auprès de l'opérateur du réseau IMS (1), et
c) si le résultat desdites vérifications est positif, le serveur S-CSCF (27) dirige la requête de service vers un réseau téléphonique (2), distinct du réseau IMS (1), auquel appartient ledit dispositif-client visé (11).

6. Procédé de routage selon la revendication 5, **caractérisé en ce que**, si ledit serveur S-CSCF (27) détermine à ladite étape b) que le service requis est un service téléphonique, alors le S-CSCF (27) vérifie en outre que le format du numéro de téléphone indiqué dans la requête de service est bien conforme aux normes concernant le format des numéros de téléphone.

7. Procédé de routage selon la revendication 5 ou la revendication 6, **caractérisé en ce que** lesdits éléments d'information contenus dans la requête de service comprennent un identifiant de service IMS Communication Service Identifier, ICSI.

8. Procédé de routage selon la revendication 5 ou la revendication 6, **caractérisé en ce que** lesdits éléments d'information contenus dans la requête de service se trouvent dans la partie Session Description Protocol, SDP, et/ou dans le header « Content-Type », et/ou dans le header « Accept-Contact » de ladite requête.

9. Procédé de routage selon l'une quelconque des revendications 5 à 8, **caractérisé en ce que** ledit dispositif-client visé (11) est un terminal mobile.

10. Procédé de routage selon l'une quelconque des revendications 5 à 8, **caractérisé en ce que** ledit dispositif-client visé (11) est un terminal fixe.

11. Moyen de stockage de données inamovible, ou partiellement ou totalement amovible, comportant des instructions de code de programme informatique pour gérer le fonctionnement d'un serveur Serving Call Server Control Function, S-CSCF, selon l'une quelconque des revendications 5-8.

12. Programme d'ordinateur téléchargeable depuis un réseau de communications et/ou stocké sur un support lisible par ordinateur et/ou exécutable par un microprocesseur, **caractérisé en ce qu'**il comprend des instructions pour gérer le fonctionnement d'un serveur Serving Call Server Control Function, S-CSCF, selon l'une quelconque des revendications 5-8, lorsqu'il est exécuté sur un ordinateur.

## Patentansprüche

1. Server Serving-Call Server Control Function, S-CSCF, der in einem IMS-Netz arbeiten kann, der Einrichtungen enthält, um eine Dienstanforderung zu empfangen, die eine Client-Vorrichtung (11) anvisiert, die zum IMS-Netz (1) gehört und für die der S-CSCF-Server (27) zuständig ist,
wobei der S-CSCF-Server auch Einrichtungen enthält, um:
- auf der Basis von in der Dienstanforderung enthaltenen Informationen Überprüfungen auszuführen, die enthalten
• die Ermittlung, dass der angeforderte Dienst ein Telefondienst ist, und
• die Ermittlung, dass der Benutzer der in der Dienstanforderung anvisierten Client-Vorrichtung (11) keinen Telefondienst beim Betreiber des IMS-Netzes (1) abonniert hat, und
- wenn das Ergebnis der Überprüfungen positiv ist, die Dienstanforderung zu einem sich vom IMS-Netz (1) unterscheidenden Telefonnetz (2) zu lenken, zu dem die anvisierte Client-Vorrichtung (11) gehört.

2. S-CSCF-Server nach Anspruch 1, **dadurch gekennzeichnet, dass** er auch Einrichtungen enthält, um, wenn er ermittelt, dass der geforderte Dienst ein Telefondienst ist, außerdem zu prüfen, dass das Format der in der Dienstanforderung angezeigten Telefonnummer tatsächlich den Normen betreffend das Format der Telefonnummern entspricht.

3. S-CSCF-Server nach Anspruch 1 oder Anspruch 2, **dadurch gekennzeichnet, dass** die in der Dienstanforderung enthaltenen Informationselemente eine IMS-Dienstkennung Communication Service Identifier, ICSI, enthalten.

4. S-CSCF-Server nach Anspruch 1 oder Anspruch 2, **dadurch gekennzeichnet, dass** die in der Dienstanforderung enthaltenen Informationselemente sich in dem Teil Session Description Protocol, SDP, und/oder im Header «Content-Type», und/oder im Header «Accept-Contact» der Anforderung befinden.

5. Verfahren zum Routen einer Dienstanforderung, die eine zu einem IMS-Netz (1) gehörende Client-Vorrichtung (11) anvisiert, das den folgenden Schritt enthält:
a) Empfang der Dienstanforderung durch den zuständigen Serving Call Server Control Function, S-CSCF-Endserver (27), im IMS-Netz (1), der anvisierten Client-Vorrichtung (11),
wobei das Verfahren anschließend die folgenden Schritte enthält:
b) der S-CSCF-Server (27) führt auf der Basis von in der Dienstanforderung enthaltenen Informationselementen Überprüfungen durch, die enthalten
• die Ermittlung, dass der geforderte Dienst ein Telefondienst ist, und
• die Ermittlung, dass der Benutzer der in der Dienstanforderung anvisierten Client-Vorrichtung (11) keinen Telefondienst beim Betreiber des IMS-Netzes (1) abonniert hat, und
c) wenn das Ergebnis der Überprüfungen positiv ist, der S-CSCF-Server (27) die Dienstanforderung zu einem sich vom IMS-Netz (1) unterscheidenden Telefonnetz (2) lenkt, zu dem die betroffene Client-Vorrichtung (11) gehört.

6. Routing-Verfahren nach Anspruch 5, **dadurch gekennzeichnet, dass**, wenn der S-CSCF-Server (27) im Schritt b) ermittelt, dass der geforderte Dienst ein Telefondienst ist, der S-CSCF (27) außerdem prüft, ob das Format der in der Dienstanforderung angezeigten Telefonnummer tatsächlich den Normen betreffend das Format der Telefonnummern entspricht.

7. Routing-Verfahren nach Anspruch 5 oder Anspruch 6, **dadurch gekennzeichnet, dass** die in der Dienstanforderung enthaltenen Dienstelemente eine IMS-Dienstkennung Communication Service Identifier, ICSI, enthalten.

8. Routing-Verfahren nach Anspruch 5 oder Anspruch 6, **dadurch gekennzeichnet, dass** die in der Dienstanforderung enthaltenen Informationselemente sich in dem Teil Session Description Protocol, SDP, und/oder im Header «Content-Type», und/oder im Header «Accept-Contact» der Anforderung befinden.

9. Routing-Verfahren nach einem der Ansprüche 5 bis 8, **dadurch gekennzeichnet, dass** die betroffene Client-Vorrichtung (11) ein mobiles Endgerät ist.

10. Routing-Verfahren nach einem der Ansprüche 5 bis 8, **dadurch gekennzeichnet, dass** die betroffene Client-Vorrichtung (11) ein ortsfestes Endgerät ist.

11. Nicht entfernbare oder teilweise oder ganz entfernbare Datenspeichereinrichtung, die EDV-Programmcodeanweisungen aufweist, um den Betrieb eines Servers Serving-Call Server Control Function, S-CSCF, nach einem der Ansprüche 5-8 zu verwalten.

12. Computerprogramm, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Anweisungen enthält, um den Betrieb eines Servers Serving-Call Server Control Function, S-CSCF, nach einem der Ansprüche 5-8 zu verwalten, wenn es auf einem Computer ausgeführt wird.

## Claims

1. S-CSCF, Serving Call Server Control Function, server capable of operating in an IMS network, comprising means for receiving a service request targeting a client device (11) belonging to said IMS network (1) and of which said S-CSCF server (27) is in charge,
the S-CSCF server also comprising means for:
- performing, on the basis of information elements contained in said service request, verifications comprising
• the determination that the service requested is a telephone service, and
• the determination that the user of the client device (11) targeted in the service request has not subscribed to a telephone service with the operator of the IMS network (1), and
- if the result of said verifications is positive, directing the service request to a telephone network (2), distinct from the IMS network (1), to which said targeted client device (11) belongs.

2. S-CSCF server according to Claim 1, **characterized in that** it also comprises means for, when it determines that the service requested is a telephone service, furthermore verifying that the format of the telephone number indicated in the service request properly complies with the norms relating to the format of telephone numbers.

3. S-CSCF server according to Claim 1 or Claim 2, **characterized in that** said information elements contained in the service request comprise an IMS Communication Service Identifier, ICSI, service identifier.

4. S-CSCF server according to Claim 1 or Claim 2, **characterized in that** said information elements contained in the service request are situated in the Session Description Protocol, SDP, part and/or in the "Content-Type" header, and/or in the "Accept-Contact" header of said request.

5. Method for routing a service request targeting a client device (11) belonging to an IMS network (1), comprising the following step:
a) reception of said service request by the final S-CSCF, Serving Call Server Control Function, server (27) in charge, in said IMS network (1), of the targeted client device (11),
the method thereafter comprising the following steps:
b) said S-CSCF server (27) performs, on the basis of information elements contained in said service request, verifications comprising
• the determination that the service requested is a telephone service, and
• the determination that the user of the client device (11) targeted in the service request has not subscribed to a telephone service with the operator of the IMS network (1), and
c) if the result of said verifications is positive, the S-CSCF server (27) directs the service request to a telephone network (2), distinct from the IMS network (1), to which said targeted client device (11) belongs.

6. Routing method according to Claim 5, **characterized in that**, if said S-CSCF server (27) determines in said step b) that the service requested is a telephone service, then the S-CSCF (27) furthermore verifies that the format of the telephone number indicated in the service request properly complies with the norms relating to the format of telephone numbers.

7. Routing method according to Claim 5 or Claim 6, **characterized in that** said information elements contained in the service request comprise an IMS Communication Service Identifier, ICSI, service identifier.

8. Routing method according to Claim 5 or Claim 6, **characterized in that** said information elements contained in the service request are situated in the Session Description Protocol, SDP, part and/or in the "Content-Type" header, and/or in the "Accept-Contact" header of said request.

9. Routing method according to any one of Claims 5 to 8, **characterized in that** said targeted client device (11) is a mobile terminal.

10. Routing method according to any one of Claims 5 to 8, **characterized in that** said targeted client device (11) is a fixed terminal.

11. Irremovable, or partially or totally removable, means for storing data comprising computer program code instructions for managing the operation of an S-CSCF, Serving Call Server Control Function, server according to any one of Claims 5-8.

12. Computer program downloadable from a communications network and/or stored on a medium readable by computer and/or executable by a microprocessor, **characterized in that** it comprises instructions for managing the operation of an S-CSCF, Serving Call Server Control Function, server according to any one of Claims 5-8, when it is executed on a computer.
